# EUROPÄISCHE PATENTSCHRIFT

(11) **EP 2 637 537 B1**
(45) Veröffentlichungstag und Bekanntmachung des Hinweises auf die Patenterteilung: **11.03.2015**
(21) Anmeldenummer: 11773299.0
(22) Anmeldetag: 25.10.2011
(51) Int. Cl.: A47J 37/10

(54) **Kochgefäßabdeckung**
Cooking vessel cover
Couvercle de récipient de cuisson

(30) Priorität: 11.11.2010 DE 102010060510
(43) Veröffentlichungstag der Anmeldung: 18.09.2013
(73) Patentinhaber: Leifheit AG, 56377 Nassau (DE)
(72) Erfinder: KÜRSCHNER, Jochen, 97877 Wertheim (DE); KUNKLER, Thomas, 56377 Nassau (DE); FISCHER, Klaus-Jürgen, 56414 Holzappel (DE); STEUDTER, Verena, 56414 Herschbach (DE); WEINTRITT, Frank, 35452 Heuchelheim (DE); THALLER, Georg, 56410 Montabaur (DE)
(74) Vertreter: Bungartz, Klaus Peter
(86) Internationale Anmeldenummer: PCT/EP2011/068655
(87) Internationale Veröffentlichungsnummer: WO 2012/062571

(56) Entgegenhaltungen:
- DE-A1- 3 318 029
- DE-U- 1 684 345
- JP-A- 10 304 918
- JP-A- 2009 018 132
- KR-Y1- 200 423 724

## Beschreibung

Die Erfindung betrifft eine Kochgefäßabdeckung für Gefäße in Form von Kochgefäßen oder Haushaltsgefäßen, mit einer von mehreren Einzelsegmenten gebildeten Abdeckung, die auf den Gefäßrand auflegbar ist, wobei die Einzelsegmente auf verschiedenen Höhen um eine Drehachse drehbeweglich zueinander gelagert sind, so dass sie zur Bildung der das Gefäß zumindest teilweise abdeckenden Abdeckung blendenartig auffächerbar und in einer Ruhestellung zu einem Stapel übereinander drehbar sind.

Kochgefäßabdeckungen dieser Art sind aus der DE 33 18 029 A1 bekannt. Diese Kochgefäßabdeckungen werden blendenartig aufgefächert und weisen hierzu mehrere, um eine gemeinsame Drehachse verdrehbare Einzelsegmente auf, die nach dem Auffächern einen geschlossenen Deckel bilden, der im Bereich der aneinander stoßenden Einzelsegmente über eine Hakenverbindung arretiert werden kann.

Bei den bekannten Kochgefäßabdeckungen sind die Einzelsegmente um eine mittige Drehachse drehbar, wobei diese Drehachse im Bereich eines Halteknopfes angeordnet ist, so dass die Kochgefäßabdeckung die Form eines üblichen Deckels aufweist, sofern die Einzelsegmente aufgefächert und geschlossen sind. Über den Halteknopf kann die Kochgefäßabdeckung auf einen Topf oder eine Pfanne aufgesetzt werden und auch wieder entfernt werden.

Der Nachteil der bekannten Kochgefäßabdeckungen besteht darin, dass insbesondere dann, wenn die Einzelsegmente dampfdurchlässig sind und die Kochgefäßabdeckung als Stützschutz ausgebildet ist, die Gefahr besteht, dass der Benutzer sich auf Grund des austretenden Dampfes verbrüht. Ein weiterer Nachteil der bekannten Kochgefäßabdeckung besteht darin, dass der austretende Dampf auch dann, wenn die Kochgefäßabdeckung an sich eher einen geschlossenen Charakter aufweist, an dem mittigen Knopf vorbei streicht, so dass die Gefahr besteht, dass sich dieser Knopf erwärmt. Dies führt zum einen zum Erfordernis, den Knopf aus einem temperaturfesten Material zu fertigen und zum anderen nach dem Bedürfnis, durch geeignete Materialwahl dafür Sorge zu tragen, dass der Knopf sich nicht erhitzen kann, so dass das Anfassen des Knopfes für die Köchin oder den Koch unkritisch bleibt.

Ein weiterer Nachteil besteht darin, dass der Dampf nicht nur Wärme sondern auch Kondenswasser oder gar Teile des Gargutes an den mittigen Knopf heranträgt, so dass dieser feucht werden kann oder verschmutzen kann. Dies führt wiederum zu der Gefahr, dass die Kochgefäßabdeckung dem Benutzer aus der Hand gleitet oder dass die Hände des Benutzers verunreinigt werden.

Eine weitere Kochgefäßabdeckung ist aus der DE 1 684 345 U bekannt. Bei dieser Kochgefäßabdeckung handelt es sich um einen Rand, der kragenartig auf eine Pfanne aufsetzbar ist und so den Pfannenrand nach oben erweitert. Im Bereich des oberen Randes weist dieser Kragen eine blendenartige Kochgefäßabdeckung mit einem Handgriff auf, wobei die Einzelsegmente an einer am Pfannenrand angeordneten Achse gelagert und mit dem Handgriff auf eine Weise verbunden sind, so dass eine Drehung des Handgriffes um diese Achse ein Auffächern der Blende zur Abdeckung des oberen Bereiches des Kragens bewirkt.

Diese Ausgestaltung hat den Nachteil, dass sie bei der Aufbewahrung im Schrank vergleichsweise viel Platz beansprucht, da der benötigte Raum für die Lagerung dieser Pfannenabdeckung im Wesentlichen genau so groß ist wie der benötigte Raum für die Lagerung der Pfanne selbst. Darüber hinaus wäre selbst dann, wenn nur die Abdeckung des oberen Bereiches des Kragens betrachtet würde, der Lagerraum vergleichsweise groß, da die Einzelsegmente auch im zusammengeklappten Zustand vom Handgriff abstehen und so eine gewisse Breite oder Länge der zusammengelegten Abdeckung benötigt wird. Schließlich muss die Achse so dimensioniert werden, dass die Einzelsegmente einseitig eingespannt werden können und sich über ihre gesamte Länge über die Pfanne erstrecken, so dass also die Länge der Einzelsegmente zumindest im mittleren Bereich dem Durchmesser der Pfanne entspricht. Dies wiederum führt zu vergleichsweise schweren Einzelsegmenten, was wiederum mit einem entsprechend hohen Lageraufwand und einem hohen Gewicht der Pfannenabdeckung einhergeht. Darüber hinaus besteht bei längeren Einzelsegmenten die größere Gefahr, dass diese federnd sind und so zum einen im Bereich der Gefäßmitte durchhängen und zum anderen ungewollte Spalte entstehen, durch die zum Beispiel das Fett entweichen kann.

Eine Sonnenschutzblende und ein Fächer zum Erzeugen kühlender Luftströmung ist aus der JP 10 304918 A bekannt. Diese weist einen Stiel mit an dessen enden gelagerten Einzelsegmenten zum Auffächern einer Schutzblende auf. Eine ähnliche Ausgestaltung zeigt die JP 2009 018132 A. Diese Geräte werden allerdings nur zum Kühlen und Schutz eines menschlichen Trägers vor Sonnenlicht verwendet.

Aufgabe der Erfindung ist es daher, eine Kochgefäßabdeckung zu suchen, die bei möglichst geringem Herstellungsaufwand eine leichte und sichere Abdeckung des Gefäßes ermöglicht und gleichzeitig im Schrank möglichst wenig Lagerraum beansprucht.

Diese Aufgabe wird nach der Erfindung durch die Merkmalskombination nach Anspruch 1 gelöst.

Durch die erfindungsgemäße Verwendung der Abdeckung als Kochgefäßabdeckung ist es nun möglich, eine besonders leichte Abdeckung des Gefäßes zu realisieren. Im Sinne dieser Anmeldung wird unter Kochgefäßabdeckung dabei jede Abdeckung von Pfannen oder Töpfen verstanden. Je nach Anwendungsfall kann das Einzelsegment unterschiedlich gestaltet sein, ferner kann der Übergangsbereich zwischen zwei Einzelsegmenten in Abhängigkeit von der Anwendung der Kochgefäßabdeckung unterschiedlich realisiert werden, was nachfolgend noch weiter im Detail ausgeführt wird.

Zwei mögliche Anwendungsfälle sind beispielsweise eine deckelartige Kochgefäßabdeckung oder eine Kochgefäßabdeckung im Sinne eines dampfdurchlässigen Spritzschutzes für Pfannen. Im ersten Fall werden die Einzelsegmente dampfundurchlässig ausgebildet sein und können beispielsweise aus Blech oder aus einem hitzeresistenten Kunststoff gefertigt sein. Im zweitgenannten Fall werden dagegen die Einzelsegmente zumindest abschnittsweise siebartig ausgebildet sein, so wie es von den bekannten Spritzschutzsieben bereits bekanntist.

Hier kann zum Beispiel das Einzelsegment einen Rahmen aufweisen, zwischen dem dann ein Gittergewebe aus Kunststoff angeordnet ist, dessen Maschenweite so eng ist, dass übliche Fetttröpfchen nicht, Dampfpartikel aber hindurch treten können. Anstelle eines solchen Rahmens können auch kleine Fenster in die Einzelsegmente eingestanzt sein, die dann über das Gittergewebe abgedeckt sind, wobei dieses Gittergewebe auf die Einzelsegmente aufgeklebt sein kann oder auch über eine Steckverbindung eingesteckt sein kann. Im letztgenannten Fall ergibt sich zusätzlich die Möglichkeit, dass die eingestanzten Durchlassfenster auch über andere, beispielsweise dampfundurchlässige Plattenelemente verschließbar sind, so dass die Kochgefäßabdeckung eine zusätzliche Austauschbarkeit der Funktionalität erhält.

Wesentliches Merkmal der verwendeten Abdeckung ist die Tatsache, dass die Kochgefäßabdeckung aus den drehbaren Einzelsegmenten derart mit dem Trägerelement verbunden ist, dass die zu einem Stapel zusammengelegten Einzelsegmente ober- oder unterhalb des Trägers angeordnet sein können. Auf diese Weise werden in Ruhe- oder Verwahrstellung die Einzelsegmente einfach unter das Trägerelement herunter gedreht, so dass das zusammengelegte Paket bestehend aus dem Stapel der Einzelsegmente und dem darüber oder darunter angeordneten Trägerelement sehr wenig Lagerplatz beansprucht. Das Trägerelement ist üblicherweise stabförmig ausgebildet und weist an seinem freien Ende die Drehachse auf, das heißt, hier ist eine Achse angeordnet, auf der wiederum die Einzelsegmente drehbar angeordnet sind.

Die Einzelsegmente sind bevorzugt nach der Form eines Querschnittes eines Kuchenstückes ausgebildet, wobei natürlich auch jede andere Form denkbar ist. Das Unterteilen des üblicherweise runden oder auch eckigen Bereiches der Kochgefäßabdeckung in die Einzelsegmente legt allerdings nach innen spitz zulaufende Segmente nahe, wobei bei einer anderen Ausgestaltung der Erfindung das Trägerelement auch so lang sein kann, dass die Drehachse beispielsweise im Bereich des Randes des Gefäßes angeordnet ist, so dass die Einzelsegmente dann zum Beispiel kreisbogenartig oder sichelförmig ausgebildet sein können. Wesentlich ist auch bei dieser Ausgestaltung der Erfindung die Tatsache, dass die Einzelsegmente derart zusammengelegt werden können, dass sie zu einem unter dem Trägerelement angeordneten Stapel zusammengelegt werden können.

Das Trägerelement kann einseitig einen Anschlag aufweisen, gegen den die Einzelsegmente verdrehbar sind. In diesem Fall ist die Öffnungsdrehrichtung der blendenartigen Abdeckung festgelegt. Das Trägerelement kann in dieser Ausgestaltung auch auf der gegenüberliegenden Seite des Anschlages einen klappbaren oder verschiebbaren Verschluss aufweisen, der im Falle des zusammengelegten Stapels der Einzelsegmente nach unten klappbar ist, so dass die Einzelsegmente zwischen diesem Verschlusselement und dem gegenüberliegenden Anschlag gehalten sind und sich nicht unbewusst im Schrank wieder auffächern können.

Das Trägerelement ist an seinem der Drehachse gegenüberliegenden Ende als Handgriff ausgebildet, der bevorzugt so groß ausgebildet ist, dass er über den Gefäßrand hinaus absteht. Dies bewirkt, dass der Handgriff nicht im Bereich des aus dem Gefäß austretenden Dampfes angeordnet ist und so weder verschmutzen kann noch sich erwärmen wird. Auch hier kann natürlich ein geeignetes Material dafür Sorge tragen, dass Wärme, die beispielsweise über die Einzelsegmente auf das Trägerelement übertragen wird, sich nicht auf den Handgriff überträgt, so dass eine sichere Bedienung der Kochgefäßabdeckung auch bei höheren Gartemperaturen möglich ist.

Bei einer weiteren bevorzugten Ausgestaltung der verwendeten Abdeckung weist das untere Einzelsegment ein Widerlager auf, das sich gegen ein entsprechend ausgebildetes Teil des Gefäßes abzustützen vermag. Im Falle eines Topfes oder einer Pfanne zum Beispiel, weist dieses Gefäß üblicherweise zumindest einen Handgriff auf, der seitlich in Form eines üblichen Griffes oder Stieles von dem Gefäß hervorsteht. Dieser Handgriff kann genutzt werden, um besonders einfach die blendenartige Kochgefäßabdeckung aufzuspannen. Hierzu wird die Kochgefäßabdeckung mit zusammengelegtem Stapelvon Einzelsegmenten so auf den Gefäßrand aufgelegt, dass das Widerlager sich bei einer ersten Drehung gegen den Griff oder den Stiel des Gefäßes abzustützen vermag.

Eine weitere Verdrehung des Trägerelementes bewirkt dann das Auffächern der Einzelsegmente. Damit hier das Auflegen des Trägerelementes erleichtert wird und nicht das Trägerelement am Pfannenrand ausbalanciert werden muss während gleichzeitig die Drehbewegung stattfindet, kann das Trägerelement die über die Drehachse hinaus bis zum gegenüberliegenden Pfannenrand verlängert sein und dort eine Auflage aufweisen, so dass das Trägerelement auf die Pfanne auflegbar ist und nicht im Gleichgewicht gehalten werden muss.

Bei der oben genannten Ausgestaltung des Trägerelementes mit einem Widerlager und einer Auflage gegenüber liegend zum Widerlager kann bei einer speziellen Ausgestaltung, die beispielsweise speziell auf einen bestimmten Gefäßtyp abgestimmt ist, das Widerlager auch so ausgebildet sein, dass es federnd auf den Griff oder den Stiel des Gefäßes aufsteckbar ist, so dass während eines gesamten Kochvorgangs die Kochgefäßabdeckung sicher auf dem Gefäß gehalten ist. Bei dieser Ausgestaltung kann der Benutzer je nach Kochbesonderheit die Abdeckung auffächern. Indem er einfach den Handgriff dreht, braucht er dagegen einen freien Zugang zum Gefäß bzw. soll das Gargut zum Beispiel einköcheln, wird er die Abdeckung öffnen, indem er den Handgriff in die entgegen gesetzte Richtung dreht und so den Stapel der Einzelsegmente zusammenlegt und unterhalb des Trägerelementes anordnet. In diesem Fall kann trotzdem die Kochgefäßabdeckung sicher auf der Pfanne verbleiben und wird allerdings nur noch einen Bereich in Form eines einzelnen Einzelsegmentes abdecken. Dies bedeutet, dass in diesem Fall das Gefäß im Wesentlichen nicht mehr abgedeckt ist, sondern vollständig offen bleibt.

Die Einzelsegmente sind bevorzugt so ausgebildet, dass benachbarte Einzelsegmente aneinander gelagert sind. Hierzu kann beispielsweise jedes Einzelsegment einen nach unten hervorspringenden Führungszapfen aufweisen, der in einer radialen Nut, die im äußeren Bereich des darunterliegenden Einzelsegmentes angeordnet ist, gehalten ist. Auf diese Weise ergibt sich eine formschlüssige Führung zwischen den beiden Einzelsegmenten, wobei die Nutenden jeweils als vorderer und hinterer Anschlag dienen. Wird nun das unterste oder oberste Einzelsegment bewegt, wird dieses nach Erreichen des Anschlages das nächste Einzelsegment mitnehmen, so dass sich bei Drehung des untersten oder obersten Einzelsegmentes um 360° nur durch Krafteinwirkung auf dieses Einzelsegment jedes dazwischen liegende Einzelsegment bewegen lässt und so die Blende aufgefächert werden kann.

Über die Führung der Einzelsegmente relativ zueinander können auch weitere Funktionalitäten ermöglicht werden. So ist es in einem einfachen Fall zum Beispiel möglich, dass die Einzelsegmente über die Führung auf Abstand zueinander gehalten werden. In diesem Fallwerden die Einzelsegmente nach oben hervorstehen, so dass sich ein leicht turbinenartiges Gesamtgebilde ergibt, so dass beispielsweise Dampf austreten kann. Eine solche Ausgestaltung ist sinnvoll, wenn zwar Dampf aus der Pfanne austreten soll, jedoch ein gewisser Spritzschutz vorgesehen sein soll. Ferner kann eine solche Kochgefäßabdeckung, insbesondere, wenn sie aus reflektierendem Metall gefertigt ist, zur Energieersparnis beitragen, da ein Teil der Wärme aus der Pfanne in die Pfanne und auf das Gargut zurückreflektiert wird. In diesem Fall wirkt dann das aus Metall gefertigte Einzelsegmentals Wärmespeicher und als Wärme reflektierende Fläche.

Darüber hinaus können die Lagerungen auch so ausgebildet sein, dass sich an den beiden Anschlägen jeweils eine Rastposition ergibt, in der die Einzelsegmente zunächst gegen eine elastische Rückhaltekraft gehalten sind. Dies verhindert, dass sich die Abdeckung, beispielsweise bei leichter Bewegung der Pfanne zum Verhindern des Anbratens des Gargutes unbeabsichtigt öffnet. Ferner kann eine solche Rastposition dafür Sorge tragen, dass der zusammengelegte Stapel in dem Küchenschrank oder in der Schublade nicht unbewusst aufgefächert wird.

Je nach Dicke der Einzelsegmente wird der Stapel eine gewisse Gesamtdicke aufweisen, wobei zumindest dann, wenn die Einzelsegmente der aufgespannten Blende nicht schräg gestellt sind, sondern alle Einzelsegmente parallel zueinander angeordnet sind, diese Spalthöhe auch zwischen dem ersten und dem letzten Einzelsegment der vollständig geöffneten Blende verbleibt.

Der oben genannte Spalt kann bewusst in Kauf genommen werden, um beispielsweise eine gewisse Dampfdurchlässigkeit oder eine Einsehbarkeit des Gefäßes zu ermöglichen. Sollte ein solcher Spalt nicht gewünscht sein, kann das oberste Einzelsegment seitlich einen herunterhängenden Spritzschutz in Form eines schmalen Streifens aufweisen, der diesen Spalt verschließt. Insbesondere in Verbindung mit dem zuvor bereits beschriebenen Anschlag kann der Spritzschutz auch eine Doppelfunktion aufweisen, indem er nämlich als starres Element ausgebildet ist, dass fest mit den Trägerelement verbunden ist. So kann dieser seitlich sich vom Trägerelement nach unten in Richtung des Pfannenbodens erstreckende Streifen zumindest abschnittsweise so weit nach unten herunter geführt sein, dass diese unteren Abschnitte den unteren Anschlag bilden. Der obere Bereich dient dann gleichzeitig als Spritzschutz, der den Spalt zwischen dem untersten und den obersten Einzelsegment abdeckt.

Weitere Merkmale und Vorteile der Erfindung ergeben sich unter anderem aus den abhängigen Ansprüchen und der nachfolgenden Beschreibung eines bevorzugten Ausführungsbeispiels anhand der Zeichnungen.

In den Zeichnungen zeigt:
- Figur 1: eine erfindungsgemäße Kochgefäßabdeckung im aufgefächerten Zustand,
- Figur 2: die Kochgefäßabdeckung aus Figur 1 in einer Seitenansicht,
- Figur 3: die Kochgefäßabdeckung, so wie Sie in den Figuren 1 und 2 dargestellt ist, allerdings hier mit zusammengelegten Einzelsegmenten
- Figur 4: die Kochgefäßabdeckung aus Figur 3 in einer Seitenansicht und
- Figur 5: die Kochgefäßabdeckung aus Figuren 3 und 4 in einer Ansicht von vorne.

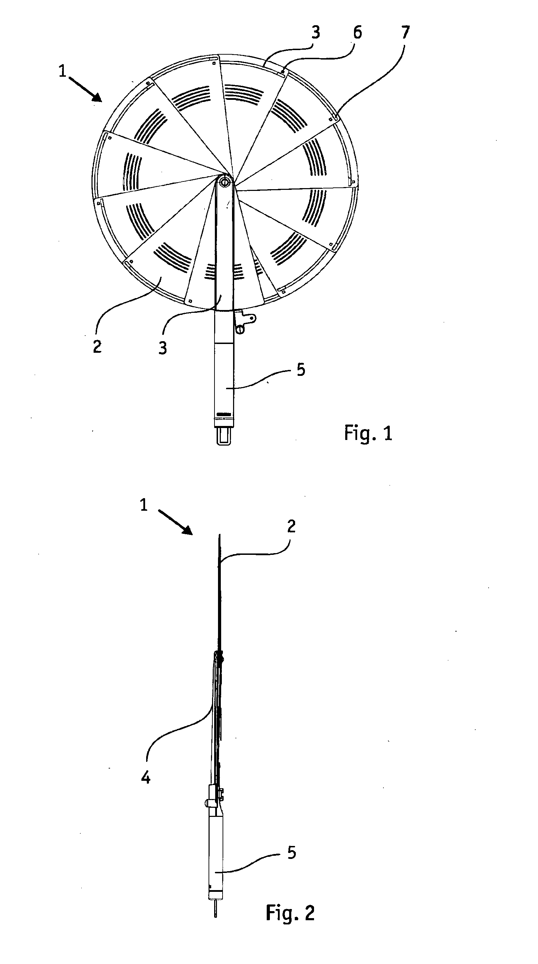

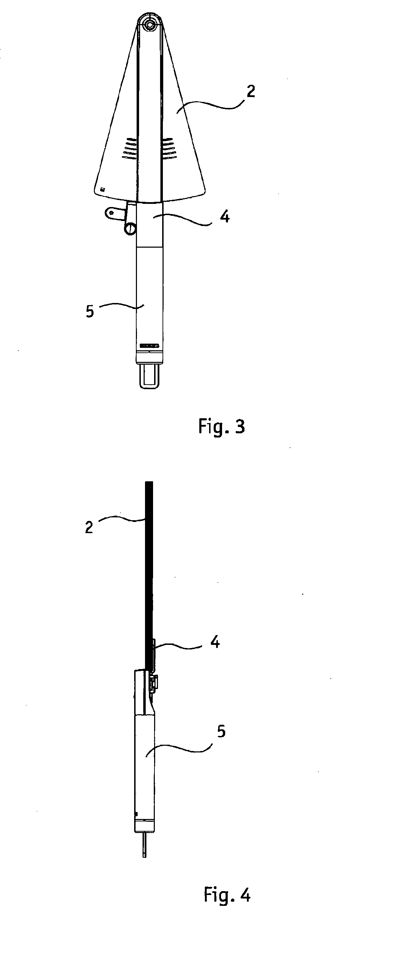

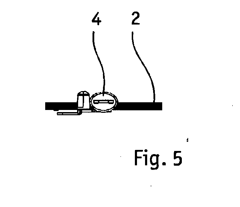

In den Figuren 1 bis 5 ist eine Kochgefäßabdeckung für die erfindungsgemäße Verwendung dargestellt. Wie am besten aus Figur 1 zu erkennen ist, besteht die Kochgefäßabdeckung aus einem stielartigen Trägerelement 4, an dessen Ende die Drehachse angeordnet ist. Entlang der Drehachse drehbeweglich gelagert sind die Einzelsegmente 2 in Form von Dreiecken mit abgerundetem hinterem Randbereich. Diese Einzelsegmente 2 haben somit im Wesentlichen die Form des Querschnittes eines Kuchenstückes.

Das Trägerelement 4 ist an seinem rückwärtigen, der Drehachse abgewandtem Ende mit einem Haken versehen, über den es mit den üblichen Aufhängemittel in der Küche aufgehängt werden kann. Gerade in Verbindung mit einem solch aufhängbaren Trägerelement 4 ist es vorteilhaft, wenn die Einzelsegmente 2 fest im Stapel gehalten werden, so dass sich nicht das oberste Einzelsegment 2 infolge der Schwerkraft dreht und somit die Blende unbeabsichtigt im hängenden Zustand aufzieht.

Die Sicherung des Stapels der Einzelsegmente 2 gegen unbeabsichtigtes Öffnen kann zum Beispiel über Reibungskräfte erfolgen, die über die Lagerung der Einzelsegmente an der Drehachse erzeugt werden kann. Darüber hinaus ist die bereits beschriebene mechanische Festlegung der EinzeLsegmente, sofern diese dann zu einem Stapel zusammengelegt sind, möglich. Alternativ kann natürlich auch eine Tasche vorgesehen sein, in die die zusammengelegte Kochgefäßabdeckung eingesteckt ist.

Die Einzelsegmente 2 sind um die Drehachse verdrehbar und an dem gegenüberliegenden Ende in Führungsnuten 3 gehalten, die die Einzelsegmente 2 mit dem darunter liegenden bzw. darüber liegenden Einzelsegment 2 verbinden. Diese Führungsnuten 3 weisen hier die Form von Lagerzapfen auf, die in radialen Durchlassspalten im äußeren Bereich des darunter liegenden Einzelsegmentes 2 gehalten sind. Die den Lagerzapfen führenden Führungsnuten 3 bilden gleichzeitig einen vorderen Anschlag 6 und einen hinteren Anschlag 7 für die Bewegung eines Einzelsegmentes 2 zum jeweils darunter liegenden bzw. darüber liegenden Einzelsegment 2.

Das unterste Einzelsegment 2 weist einen kleinen Führungszapfen in Richtung des Handgriffes 5 auf, der als Handhabe dient. Die Einzelsegmente im gezeigten Ausführungsbeispiel weisen Riefen bzw. sickenartige Erhebungen auf, die verhindern, dass die übereinander liegenden Einzelsegmente vollflächig aneinander liegen, was wiederum zu einem Verkratzen der hochglänzenden Segmente führen kann. Ferner führt dies dazu, dass die Auffächerbewegung wesentlich vereinfacht wird.

In den Figuren 2 bis 5 ist die Kochgefäßabdeckung aus Figur 1 in weiteren Positionen aufgefächert und zusammengelegt dargestellt.

### Bezugszeichenliste:

- 1: Abdeckung
- 2: Einzelsegment
- 3: Führungsnut
- 4: Trägerelement
- 5: Handgriff
- 6: Vorderer Anschlag
- 7: Hinterer Anschlag

## Patentansprüche

1. Verwendung einer Abdeckung (1) als Gefäßabdeckung für Gefäße in Form von Kochgefäßen oder Haushaltsgefäßen, wobei die von mehreren Einzelsegmenten (2) gebildete Abdeckung (1) auf den Gefäßrand auflegbar ist, wobei die Einzelsegmente (2) auf verschiedenen Höhen um eine Drehachse drehbeweglich zueinander gelagert sind, so dass sie zur Bildung der das Gefäß zumindest teilweise abdeckenden Abdeckung (1) blendenartig auffächerbar und in einer Ruhestellung zu einem Stapel übereinander drehbar sind, **dadurch gekennzeichnet, dass** die Drehachse an einem Ende eines stielafigen Trägerelements (4) angeordnet ist, das einen im geschlossenen Zustand die Abdeckung (1) überragenden Handgriff (5) aufweist, wobei die Einzelsegmente (2) derart an dem Trägerelement (4) gelagert sind, dass der Stapel der übereinander gedrehten Einzelsegmente (2) in Ruhestellung ober- oder unterhalb des Trägerelements (4) angeordnet ist.

2. Verwendung einer Abdeckung (1) nach Anspruch 1, **dadurch gekennzeichnet, dass** die Einzelsegmente an ihrem, der Drehachse abgewandten Rand jeweils mit einem benachbarten Einzelsegment (2) über einen Lagerzapfen verbunden sind, wobei der Lagerzapfen von einer Seite des Einzelsegments (2) in Richtung des benachbarten Einzelsegments (2) hervorspringt und mit einer radial am Rand des Einzelsegments (2) angeordneten Führungsnut (3) derart zusammenwirkt, dass er zwischen einem vorderen Anschlag (6) und einem hinteren Anschlag (7) formschlüssig und radial beweglich geführt ist.

3. Verwendung einer Abdeckung (1) nach dem vorhergehenden Anspruch, **dadurch gekennzeichnet, dass** das unterste Einzelsegment (2) an dem der Drehachse abgewandten Ende ein nach unten hervorspringendes Widerlager aufweist, das sich bei Drehen des Trägerelementes (4) relativ zum Gefäß gegen einen Rand des Gefäßes, insbesondere einem seitlich hervorspringenden Handgriff abzustützen vermag, so dass die Abdeckung (1) infolge des über das Widerlager gehaltenen unteren Einzelsegmentes (2) und der Drehung des Trägerelementes (4) auffächerbar ist.

4. Verwendung einer Abdeckung (1) nach einem der vorhergehenden Ansprüche, **dadurch gekennzeichnet, dass** das Trägerelement (4) zumindest abschnittsweise teleskopstangenartig ausziehbar ausgebildet ist, so dass der Handgriff (5) radial nach außen in der Position verschiebbar ist.

5. Verwendung einer Abdeckung (1) nach einem der vorhergehenden Ansprüche, **dadurch gekennzeichnet, dass** die Einzelsegmente (2) ebene Segmente mit der Form der Querschnittsfläche eines Kuchenstückes sind, durch deren Spitze die Drehachse verläuft.

6. Verwendung einer Abdeckung (1) nach dem vorhergehenden Anspruch, **dadurch gekennzeichnet, dass** die Einzelsegmente (2) derart einheitlich geformt und angeordnet sind, dass die Abdeckung im geschlossenen Zustand kreisrund ist.

7. Verwendung einer Abdeckung (1) nach einem der Ansprüche 1 bis 5, **dadurch gekennzeichnet, dass** die Einzelsegmente (2) eine unterschiedliche Länge und Form mit einer Form aufweisen, dass die geschlossene Abdeckung (1) quadratisch, rechteckig oder oval ausgebildet ist.

8. Verwendung einer Abdeckung (1) nach einem der vorhergehenden Ansprüche, **dadurch gekennzeichnet, dass** das Trägerelement (4) im Bereich der Drehachse ein Gelenk aufweist, so dass die aufgefächerten und/oder zusammengelegten Einzelsegmente (2) relativ zum Trägerelement (4) klappbar sind.

9. Verwendung einer Abdeckung (1) nach einem der vorhergehenden Ansprüche, **dadurch gekennzeichnet, dass** die Einzelsegmente (2) lösbar auf einer zur Drehachse konzentrischen Welle angeordnet sind.

10. Verwendung einer Abdeckung (1) nach einem der vorhergehenden Ansprüche, **dadurch gekennzeichnet, dass** die Einzelsegmente (2) aus einem dampfdurchlässigen Material bestehen.

11. Verwendung einer Abdeckung (1) nach einem der Ansprüche 1 bis 9, **dadurch gekennzeichnet, dass** die Einzelsegmente (2) aus einem dampfdichten Material bestehen.

12. Verwendung einer Abdeckung (1) nach Anspruch 2, **dadurch gekennzeichnet, dass** an zumindest einem Ende der Führung für die Lagerzapfen jedes Einzelsegments (2) eine Rastposition vorgesehen ist, wobei der Lagerzapfen in der Rastposition federnd gehalten ist und durch Aufbringen einer geringen Lösekraft aus der Rastposition herauslösbar ist.

13. Verwendung einer Abdeckung (1) nach einem der vorhergehenden Ansprüche, **dadurch gekennzeichnet, dass** das oberste Einzelsegment (2) an seinem auf die Drehachse zutaufenden und das Gefäß durchquerenden Rand einen herunterhängenden Seitenschutz in Form eines schmalen Streifens aufweist, dessen Breite etwas geringer als die Höhe des Stapels der aufeinandergelegten Einzelsegmente (2) ist und der den Spalt zwischen dem obersten und dem untersten Einzelsegment (2) zu verschließen vermag.

14. Verwendung einer Abdeckung (1) nach Anspruch 2, **dadurch gekennzeichnet, dass** die Lagerzapfen derart ausgebildet sind, dass sie die benachbarten Einzelsegmente (2) in einem Abstand zueinander zu halten vermögen, so dass zwischen benachbarten Einzelsegmenten (2) ein dampfdurchlässiger Spalt verbleibt.

## Claims

1. A use of a cover (1) as vessel cover for vessels in the form of cooking vessels or household vessels, wherein the cover (1), which is formed from a plurality of individual segments (2), can be placed on the vessel edge, wherein the individual segments (2) are mounted at different heights so as to be capable of being rotated with respect to one another about an axis of rotation, so that they can be fanned out in the manner of a screen for the purpose of forming the cover (1), which at least partially covers the vessel, and can be rotated one onto the other so as to form a stack in an inoperative position, **characterized in that** the axis of rotation is arranged at an end of a stem-like support element (4), which has a handle (5), which, in the closed state, projects over the cover (1), wherein the individual segments (2) are mounted to the support element (4) in such a way that the stack of the individual segments (2), which are rotated one onto the other, is arranged above or below the support element (4) in the inoperative position.

2. The use of a cover (1) according to claim 1, **characterized in that**, at their edge facing away from the axis of rotation, the individual segments are in each case connected to an adjacent individual segment (2) via a bearing pin, wherein the bearing pin sticks out from a side of the individual segment (2) towards the adjacent individual segment (2) and interacts with a guide groove (3), which is arranged radially at the edge of the individual segment (2), in such a way that it is guided in a positive and radially movable manner between a front stop (6) and a rear stop (7).

3. The use of a cover (1) according to the preceding claim, **characterized in that**, at the end facing away from the axis of rotation, the lowermost individual segment (2) has a thrust bearing, which protrudes downwards and which is capable of being supported against an edge of the vessel, in particular a handle, which protrudes laterally, in response to the rotation of the support element (4) relative to the vessel, so that the cover (1) can be fanned out as a result of the lower individual segment (2), which is held via the thrust bearing, and the rotation of the support element (4).

4. The use of a cover (1) according to one of the preceding claims, **characterized in that** the support element (4) is embodied so as to be capable of being extended in a telescope bar-like manner, at least in sections, so that the handle (5) can be shifted radially outwards in the position.

5. The use of a cover (1) according to one of the preceding claims, **characterized in that** the individual segments (2) are flat segments comprising the form of the cross sectional surface of a piece of cake, through the tip of which the axis of rotation runs.

6. The use of a cover (1) according to the preceding claim, **characterized in that** the individual segments (2) are formed and arranged in a uniform manner in such a way that the cover is circular in the closed state.

7. The use of a cover (1) according to one of claims 1 to 5, **characterized in that** the individual segments (2) have a different length and form comprising a form, which is such that the closed cover (1) is embodied so as to be square, rectangular or oval.

8. The use of a cover (1) according to one of the preceding claims, **characterized in that**, in the area of the axis of rotation, the support element (4) has a joint, so that the fanned out and/or collapsed individual segments (2) can be folded relative to the support element (4).

9. The use of a cover (1) according to one of the preceding claims, **characterized in that** the individual segments (2) are releasably arranged on a shaft, which is concentric to the axis of rotation.

10. The use of a cover (1) according to one of the preceding claims, **characterized in that** the individual segments (2) consist of a steam-permeable material.

11. The use of a cover (1) according to one of claims 1 to 9, **characterized in that** the individual segments (2) consist of a steam-tight material.

12. The use of a cover (1) according to claim 2, **characterized in that** provision is made on at least one end of the guide for the bearing pins of each individual segment (2) for a detent position, wherein the bearing pin is held in a resilient manner in the detent position and can be released from the detent position by applying a slight release force.

13. The use of a cover (1) according to one of the preceding claims, **characterized in that**, at its edge, which runs towards the axis of rotation and which passes through the vessel, the uppermost individual segment (2) has a side protection in the form of a narrow strip, which hangs down and the width of which is slightly smaller than the height of the stack of the individual segments (2), which are placed on top of one another, and which is able to close the gap between the uppermost and the lowermost individual segment (2).

14. The use of a cover (1) according to claim 2, **characterized in that** the bearing pins are embodied in such a way that they are able to hold the adjacent individual segments (2) at a distance with respect to one another so that a steam-permeable gap remains between adjacent individual segments (2).

## Revendications

1. Utilisation d'un couvercle (1) en tant que couvercle de récipient pour des récipients présentant la forme de récipients de cuisson ou de récipients ménagers, le couvercle (1) formé de plusieurs segments (2) individuels pouvant se poser sur le bord du récipient, les segments (2) individuels étant logés sur différentes hauteurs en étant mobiles en rotation les uns par rapport aux autres autour d'un axe de rotation, de sorte que pour former le couvercle (1) recouvrant au moins en partie le récipient, ils soient déployables en éventail et que dans une position de repos, ils soient rotatifs en superposition de sorte à former une pile, **caractérisée en ce que** l'axe de rotation est placé sur une extrémité d'un élément porteur (4) du type d'une tige qui comporte une poignée (5) qui en position fermée saillit par-dessus le couvercle (1), les segments (2) individuels étant logés sur l'élément porteur (4) de telle sorte que la pile des segments (2) individuels tournés en superposition en position de repos soit placée au-dessus ou en-dessous de l'élément porteur (4).

2. Utilisation d'un couvercle (1) selon la revendication 1, **caractérisée en ce que** sur leur bord opposé à l'axe de rotation, les segments individuels sont chacun relié avec un segment (2) individuel par l'intermédiaire d'un tourillon, le tourillon saillant à partir d'un côté du segment (2) individuel en direction du segment (2) individuel voisin et interagissant avec une rainure de guidage (3) placée en direction radiale sur le bord du segment (2) individuel, de sorte à être guidé par complémentarité de forme et à être mobile en direction radiale entre une butée (6) antérieure et une butée (7) postérieure.

3. Utilisation d'un couvercle (1) selon la revendication précédente, **caractérisée en ce que** sur l'extrémité opposée à l'axe de rotation, le segment (2) individuel inférieur comporte un contre-appui saillant, qui lors de la rotation de l'élément porteur (4) par rapport au récipient est susceptible de s'appuyer contre un bord du récipient, notamment une poignée saillant latéralement de sorte que le couvercle (1) est déployable du fait du segment (2) individuel inférieur maintenu par l'intermédiaire du contre-appui et de la rotation de l'élément porteur (4).

4. Utilisation d'un couvercle (1) selon l'une quelconque des revendications précédentes, **caractérisée en ce que** l'élément porteur (4) est conçu en étant extractible de manière télescopique au moins par sections, de sorte que la poignée (5) soit déplaçable en direction radiale vers l'extérieur dans la position.

5. Utilisation d'un couvercle (1) selon l'une quelconque des revendications précédentes, **caractérisée en ce que** les segments (2) individuels sont des segments plans présentant la forme de la surface de section transversale d'une part de gâteau à travers la pointe de laquelle s'étend l'axe de rotation.

6. Utilisation d'un couvercle (1) selon l'une quelconque des revendications précédentes, **caractérisée en ce que** les segments (2) individuels sont formés et placés de manière égale, de telle sorte que dans la position fermée, le couvercle soit circulaire.

7. Utilisation d'un couvercle (1) selon l'une quelconque des revendications 1 à 5, **caractérisée en ce que** les segments (2) individuels présentent une longueur et une forme d'une conformation telle que le couvercle (1) fermé soit conçu en étant quadratique, rectangulaire ou ovale.

8. Utilisation d'un couvercle (1) selon l'une quelconque des revendications précédentes, **caractérisée en ce que** dans la zone de l'axe de rotation, l'élément porteur (4) comporte une articulation, de telle sorte que les segments (2) individuels déployés et/ou repliés soit rabattables par rapport à l'élément (4) porteur.

9. Utilisation d'un couvercle (1) selon l'une quelconque des revendications précédentes, **caractérisée en ce que** les segments (2) individuels sont placés de manière amovible sur un arbre concentrique par rapport à l'axe de rotation.

10. Utilisation d'un couvercle (1) selon l'une quelconque des revendications précédentes, **caractérisée en ce que** les segments (2) individuels sont constitués d'une matière perméable à la vapeur.

11. Utilisation d'un couvercle (1) selon l'une quelconque des revendications 1 à 9, **caractérisée en ce que** les segments (2) individuels sont constitués d'une matière étanche à la vapeur.

12. Utilisation d'un couvercle (1) selon la revendication 2, **caractérisée en ce que** sur au moins une extrémité du guidage pour les tourillons de chaque segment (2) individuel, il est prévu une position d'enclenchement, dans la position d'enclenchement, le tourillon étant maintenu de manière élastique et par l'application d'une faible force de déverrouillage, étant déverrouillable hors de la position d'enclenchement.

13. Utilisation d'un couvercle (1) selon l'une quelconque des revendications précédentes, **caractérisée en ce que** sur son bord s'étendant vers l'axe de rotation et traversant le récipient, le segment (2) individuel supérieur comporte une protection latérale tombant vers le bas sous la forme d'une bande étroite dont la largeur est légèrement inférieure à la hauteur de la pile des segments (2) individuels superposés et qui est susceptible de fermer la fente entre le segment (2) individuel supérieur et inférieur.

14. Utilisation d'un couvercle (1) selon la revendication 2, **caractérisée en ce que** les tourillons sont conçus de telle sorte que les segments (2) individuels voisins soient susceptibles de se tenir à une distance mutuelle, de sorte à ménager une fente laissant passer la vapeur entre les segments (2) individuels voisins.
